# DEMANDE DE BREVET EUROPEEN

(11) **EP 4 793 529 A1**
(43) Date de publication de la demande: **19.08.2026**
(21) Numéro de dépôt: 26158094.8
(22) Date de dépôt: 12.02.2026
(51) Int. Cl.: F16K 24/04, F16K 27/02, F16K 31/20, F16K 33/00, F16L 55/07, F16K 1/42

(54) **VANNE DE DÉGAZAGE ÉTANCHE À TRÈS BASSE PRESSION DE SERVICE POUR CANALISATIONS DE LIQUIDE SOUS PRESSION**

(30) Priorité: 13.02.2025 FR 2501525
(71) Demandeur: Bayard, 69330 Meyzieu (FR)
(72) Inventeur: PIOT, Raphaël, Marie, Emeric, Hervé, 69100 Villeurbanne (FR); NESME, Matthieu, 69330 Meyzieu (FR)
(74) Mandataire: Cabinet Didier Martin

(57) **Abrégé**

- L'invention concerne une vanne de dégazage (1) comportant une chambre de flottaison (6), un dispositif de soupape (9) comprenant une face d'obturation (10) avec une ouverture de désaérage (11), un flotteur (5) comprenant une portion d'obturation (8) mobile dans la chambre de flottaison (6) entre une position haute d'obturation de l'ouverture de dégazage, et une position basse de dégagement de la ouverture de dégazage, la face d'obturation présentant une protubérance centrale portant l'ouverture de dégazage et une protubérance latérale qui définit trois points de butée (18) répartis autour de la protubérance centrale de sorte que, en position haute, un contact du flotteur contre l'un des points de butée maintient une obturation étanche de l'ouverture de dégazage.

## Description

La présente invention se rapporte au domaine technique général des vannes de régulation de gaz dans des canalisations de liquide, c'est-à-dire des appareils de robinetterie destinés à assurer l'évacuation de gaz présent et / ou l'admission de gaz dans des canalisations de liquides, tel que par exemple des réseaux d'alimentation et de distribution d'eau potable ou des réseaux d'assainissement d'eaux usées. Plus précisément, la présente invention se rapporte au domaine technique des vannes de dégazage pour canalisations de liquide sous pression, c'est-à-dire des appareils de robinetterie plus spécifiquement destinés à assurer l'évacuation automatique de faibles volumes de gaz présents dans des canalisations de liquide sous pression.

La présente invention concerne une vanne de dégazage pour canalisations de liquide sous pression comportant
- un corps creux, qui définit une chambre de flottaison,
- un dispositif de soupape, distinct dudit corps creux et comprenant une face d'obturation pourvue d'une ouverture de dégazage, et
- un flotteur comprenant une portion d'obturation et agencé mobile à l'intérieur de la chambre de flottaison de manière à pouvoir se déplacer, sous l'effet de liquide et/ou de gaz présents dans la chambre de flottaison, entre une position haute dans laquelle la portion d'obturation est en contact avec la face d'obturation et obture ladite ouverture de dégazage, et une position basse dans laquelle la portion d'obturation est éloignée de la face d'obturation et dégage ladite ouverture de dégazage.

Il est déjà connu d'avoir recours, par exemple dans les réseaux d'alimentation et de distribution d'eau (eau potable, irrigation, protection incendie, etc.) ou les réseaux d'assainissement d'eaux usées, à des vannes de régulation de gaz dans des canalisations de liquide. Aussi dénommées « ventouses », ces vannes sont des appareils de robinetterie conçus en particulier pour évacuer du gaz (en particulier de l'air) présent dans des canalisations de liquides. En effet, la présence de poches de gaz dans les canalisations est susceptible de générer des phénomènes de surpressions et de réduction de la section de passage des canalisations et du débit de liquide. Une telle réduction de la section de passage peut notamment conduire à une augmentation de la consommation électrique des pompes dont les réseaux sont équipés, et une dégradation de leurs performances. Elle peut également entraîner une augmentation des pertes de charge, ainsi que des phénomènes de cavitation, de corrosion, de bruit, de vibrations et de détérioration structurelle dans les canalisations. De plus, la présence de gaz peut perturber le bon fonctionnement d'équipent de mesure et de surveillance de paramètres de fonctionnement des réseaux. Il est par conséquent impératif, pour garantir un fonctionnement sûr et efficace des réseaux, de parvenir à éliminer en continu les gaz présents dans les canalisations des réseaux. Dans certains cas, les ventouses sont également conçues pour autoriser une admission d'air dans des canalisations, en particulier lors d'une opération de vidange de ces dernières, d'arrêt brutal d'une pompe ou encore de fermeture d'une vanne, et éviter ainsi des phénomènes préjudiciables de dépressions et de « coup de bélier » dans les canalisations.

On distingue ainsi classiquement trois types de ventouses, à savoir les ventouses « simple fonction » (ou « simple effet »), « double fonction » (ou « double effet ») et « triple fonction » (ou « triple effet »). Parfois également appelées « ventouses automatiques », « purgeurs automatiques » ou encore « ventouses de dégazage », les ventouses dites « simple fonction » sont spécifiquement conçues pour assurer une libération automatique, en continu, de faibles volumes de gaz (en particulier d'air) présent dans des canalisations sous pression dans lesquelles circulent un liquide (par exemple de l'eau). Les ventouses dites « double fonction » sont conçues d'une part pour assurer une libération d'importants volumes de gaz (en particulier d'air) présent dans des canalisations, en particulier lors de la mise en service (mise en eau) de ces dernières (aérage, à grand débit), et d'autre part pour autoriser l'admission d'importants volumes d'air dans des canalisations (désaérage, à grand débit), en particulier lors d'une opération de vidange de ces dernières, ou en cas de chutes brutales de pression engendrée par exemple par l'arrêt brutal d'une pompe ou encore la fermeture d'une vanne. Enfin, les ventouses dites « triple fonction » sont conçues pour assurer les fonctions précitées des ventouses « simple fonction » et des ventouses « double fonction ».

Classiquement, une vanne de dégazage, conçue pour assurer une libération automatique de faibles volumes de gaz présent dans des canalisations de liquide sous pression (ventouses « simple fonction » ou « triple fonction »), comporte un corps creux, dont une paroi interne définit une chambre de flottaison dans laquelle est agencé un flotteur, ainsi qu'un dispositif de soupape comprenant un conduit de dégazage et une face d'obturation pourvue d'une ouverture de dégazage par lequel le conduit de dégazage communique avec la chambre de flottaison, pour permettre ainsi une évacuation de gaz présent dans la chambre de flottaison et provenant de canalisations auxquelles la vanne de dégazage est connectée. Typiquement, ce dispositif de soupape forme ou comprend un ajutage de faible section de passage.

Le flotteur est mobile, sous l'effet de liquide et / ou de gaz présents dans la chambre de flottaison, entre une position haute dans laquelle une portion d'obturation du flotteur est en contact avec la face d'obturation du dispositif de soupape et obture l'ouverture de dégazage de ce dernier, et une position basse dans laquelle la portion d'obturation du flotteur est au contraire éloignée de la face d'obturation du dispositif de soupape et dégage ainsi l'ouverture de dégazage de ce dernier. Le poids du flotteur est choisi supérieur à l'action de la pression et de la poussée d'Archimède qui, en l'absence de poche de gaz dans la chambre de flottaison, maintient le flotteur plaqué à l'encontre la face d'obturation du dispositif de soupape. Lorsqu'une poche d'air apparaît dans la chambre de flottaison, le flotteur se dénoie et la poussée d'Archimède exercée par le liquide sur le flotteur diminue progressivement. Lorsque le flotteur atteint un certain niveau de dénoyage, son poids devient prépondérant, ce qui entraîne le déplacement du flotteur vers sa position basse, le dégagement de l'ouverture de dégazage et ainsi l'élimination de la poche de gaz via le conduit de dégazage. Une fois la poche de gaz éliminée, l'action de la pression et de la poussée d'Archimède exercée sur le flotteur par le liquide présent dans la chambre de flottaison contre le poids du flotteur et ramène ce dernier dans sa position haute, en contact avec la face d'obturation du dispositif de soupape afin d'interdire le passage de liquide par l'orifice de dégazage et le conduit de dégazage.

De telles vannes de dégazage à flotteur connues donnent généralement pleinement satisfaction pour des pressions allant jusqu'allant jusqu'à 6, 16, 25 ou même 40 bar (soit 6.10⁵, 16.10⁵, 25.10⁵ ou même 40.10⁵ Pa) selon les modèles. En revanche, le fonctionnement de ces vannes de dégazage à de faibles pressions, typiquement inférieure à 0,5 bar (soit 5.10⁴ Pa, soit environ 5 mCE (mètre de Colonne d'Eau)), s'avère perfectible, un contact étanche entre le flotteur et la face d'obturation du dispositif de soupape n'étant pas toujours parfaitement assuré. Cela entraîne donc un problème de fiabilité de ces vannes de dégazage à très basses pressions, et en particulier un risque de fuite et dispersion de liquide.

On connait par ailleurs d'autres types de vanne de dégazage à flotteur, qui sont généralement de conception plus complexe, et / ou moins robuste. Par exemple, on connaît des vannes de dégazage dites « à joint déroulant », dans lesquelles le déplacement d'un flotteur dans une chambre de flottaison de la vanne entraîne un recouvrement plus ou moins complet d'une large ouverture de dégazage par un joint souple déroulant relié au flotteur.

Les objets assignés à l'invention visent par conséquent à répondre aux problématiques précitées et, en particulier, à proposer une nouvelle vanne de dégazage pour canalisations de liquide sous pression dont le fonctionnement est particulièrement fiable même à très basses pressions de service.

Un autre objet de l'invention vise à proposer une nouvelle vanne de dégazage dont l'encombrement est maîtrisé.

Un autre objet de l'invention vise à proposer une nouvelle vanne de dégazage qui est de conception particulièrement robuste.

Un autre objet de l'invention vise à proposer une nouvelle vanne de dégazage qui est non seulement particulièrement fiable à très basses pressions de service, mais également à très hautes pressions de service.

Un autre objet de l'invention vise à proposer une nouvelle vanne de dégazage dont la maintenance est particulièrement aisée.

Un autre objet de l'invention vise à proposer une nouvelle vanne de dégazage dont la mise en œuvre est particulièrement sûre.

Les objets assignés à l'invention sont atteints à l'aide d'une vanne de dégazage pour canalisations de liquide sous pression, comportant
- un corps creux, qui définit une chambre de flottaison,
- un dispositif de soupape, distinct dudit corps creux et comprenant une face d'obturation pourvue d'une ouverture de dégazage, et
- un flotteur comprenant une portion d'obturation et agencé mobile à l'intérieur de la chambre de flottaison de manière à pouvoir se déplacer, sous l'effet de liquide et / ou de gaz présents dans la chambre de flottaison, entre une position haute dans laquelle la portion d'obturation est en contact avec la face d'obturation et obture ladite ouverture de dégazage, et une position basse dans laquelle la portion d'obturation est éloignée de la face d'obturation et dégage ainsi ladite ouverture de dégazage,
ladite vanne de dégazage étant caractérisée en ce que ladite face d'obturation présente une surface de base, une protubérance centrale qui s'étend en saillie de ladite surface de base jusqu'à une extrémité libre qui porte ladite ouverture de dégazage, et au moins une protubérance latérale qui s'étend en saillie de ladite surface de base et qui définit au moins trois points de butée répartis radialement autour de la protubérance centrale, ladite protubérance centrale et ladite au moins une protubérance latérale étant agencées l'une par rapport à l'autre pour que, le flotteur étant dans ladite position haute, un contact du flotteur avec l'un au moins desdits points de butée maintienne une obturation étanche de ladite ouverture de dégazage.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :

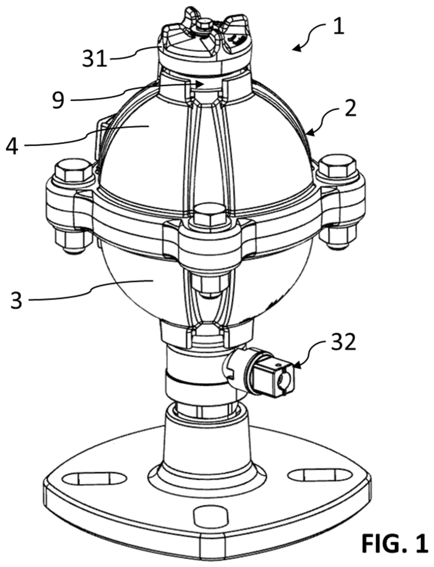

- la figure 1 illustre, selon une vue en perspective, un mode de réalisation d'une vanne de dégazage conforme à l'invention, laquelle forme ici une ventouse dite « simple fonction » ;
- la figure 2 illustre, selon une vue en perspective et en coupe partielle, une partie de la vanne de dégazage de la figure 1 en fonctionnement normal dit « de service », le flotteur étant en position haute d'obturation étanche en l'absence de poche d'air dans la chambre de flottaison ;
- la figure 3 illustre, selon une vue de face en coupe, une partie de la vanne de dégazage de la figure 1 en fonctionnement normal dit « de service », le flotteur étant dans sa position haute d'obturation sous l'effet du liquide dans la chambre de flottaison, en l'absence de poche d'air à évacuer de la chambre de flottaison, comme à la figure 2 ;
- la figure 4 illustre, selon une vue de face en coupe, une partie de la vanne de dégazage de la figure 1 en fonctionnement normal dit « de service », le flotteur étant dans une position inférieure à sa position haute d'obturation, sous l'effet de la présence d'une poche de gaz dans la chambre de flottaison ;
- la figure 5 illustre, selon une vue de face en coupe, une partie de la vanne de dégazage de la figure 1 en fonctionnement dit « de contrôle », le flotteur étant dans position supérieure dans laquelle il est en contact avec un moyen de butée additionnel que comprend la vanne de dégazage, en l'absence de poche de gaz dans la chambre de flottaison ;
- la figure 6 illustre, selon une vue en perspective, le dispositif de soupape de la vanne de dégazage de la figure 1, une pièce de soupape mobile du dispositif de soupape étant en position dite « de service », comme aux figures 2 à 4 ;
- la figure 7 illustre, selon une vue de dessous, le dispositif de soupape de la figure 6, dont un moyen de commande (volant) a été omis ;
- la figure 8 illustre, selon une vue de face, le dispositif de soupape de la figure 6, dont un moyen de commande (volant) a été omis ;
- la figure 9 illustre, selon une vue en coupe A-A, le dispositif de soupape de la figure 8 ;
- la figure 10 illustre, selon une vue en perspective, le dispositif de soupape de la vanne de dégazage de la figure 1, une pièce de soupape mobile du dispositif de soupape étant en position dite « de contrôle », comme à la figure 5 ;
- la figure 11 illustre, selon une vue de face, le dispositif de soupape de la figure 10, dont un moyen de commande (volant) a été omis ;
- la figure 12 illustre, selon une vue en coupe A-A, le dispositif de soupape de la figure 11 ;
- la figure 13 illustre, selon une vue en perspective, la pièce de soupape mobile du dispositif de soupape de la vanne de dégazage de la figure 1 ;
- la figure 14 illustre, selon une vue en coupe en coupe A-A (cf. figures 8 et 11) tronquée, la pièce de soupape de la figure 13.

L'invention concerne une vanne de dégazage 1 pour canalisations de liquide sous pression, en particulier d'eau (eau potable, eaux usées, etc.). Ainsi, en lien avec les explications fournies en préambule ci-avant, la vanne de dégazage 1 selon l'invention constitue une ventouse, plus spécifiquement une ventouse pour canalisations de liquide(s) sous pression, tel que par exemple une ventouse « simple fonction » (ou « purgeur ») ou une ventouse « triple fonction ». La vanne de dégazage 1 (ou « ventouse ») selon l'invention est donc conçue pour assurer au moins une fonction de libération automatique de gaz, et par exemple d'air, présent dans des canalisations auxquelles la vanne de dégazage 1 est destinée à être raccordée. En l'espèce, selon un mode de réalisation particulier illustré aux figures, la vanne de dégazage 1 selon l'invention constitue une ventouse « simple fonction ». Cependant, l'invention n'est évidemment pas limitée à un tel mode de réalisation, et la vanne de dégazage 1 selon l'invention peut être conçue pour assurer une ou plusieurs fonctions supplémentaires (aérage à grand débit, désaérage à grand débit, etc.). Typiquement, la vanne de dégazage 1 selon l'invention est destinée à être raccordée, c'est-à-dire à être reliée en communication fluidique, à une ou plusieurs canalisations appartenant par exemple à un réseau d'alimentation et de distribution d'eau potable et / ou d'eau destinée à la lutte contre les incendies, à un réseau d'irrigation ou encore à un réseau d'assainissement d'eaux usées.

La vanne de dégazage 1 comporte un corps creux 2, comprenant typiquement un corps principal 3 et un couvercle 4 (ou « chapeau ») qui est solidarisé à ce dernier pour former ledit corps creux 2. La solidarisation du couvercle 4 au corps principal 3 peut être assurée par exemple à l'aide de vis ou de boulons. Typiquement, un joint d'étanchéité, par exemple torique, peut être prévu entre le corps principal 3 et le couvercle 4. Par exemple, comme dans le mode de réalisation illustré aux figures, le corps principal 3 et le couvercle 4 peuvent prendre la forme générale de demi-sphères. Par exemple, le corps creux 2 est en fonte ductile.

La vanne de dégazage 1 comporte un flotteur 5, qui est agencé à l'intérieur d'une chambre de flottaison 6 définie par le corps creux 2 de la vanne de dégazage 1. En d'autres termes, le corps creux 2 de la vanne de dégazage 1 définit une cavité interne, délimitée par une paroi interne du corps creux 2 et destinée à recevoir du liquide, et dans laquelle est monté le flotteur 5. Typiquement, la vanne de dégazage 1 comprend une entrée de liquide 7, débouchant dans la chambre de flottaison 6, et par l'intermédiaire de laquelle du liquide, provenant d'une canalisation (non illustrée) à laquelle la vanne de dégazage 1 est raccordée, pénètre dans la chambre de flottaison 6. Avantageusement, la vanne de dégazage 1 comporte une bride de raccordement prévue pour solidariser, par exemple par vissage ou boulonnage, la vanne de dégazage 1 à ladite canalisation et assurer une communication fluidique entre cette dernière et ladite la chambre de flottaison 6. Le flotteur 5 comprend une portion d'obturation 8, qui définit typiquement une portion supérieure du flotteur 5.

Selon l'invention, la vanne de dégazage 1 comporte également un dispositif de soupape 9 (ou « dispositif de purge »). Distinct du corps creux 2 de la vanne de dégazage 1, ledit dispositif de soupape 9 comprend une face d'obturation 10 pourvue d'une ouverture de dégazage 11. Comme illustré en exemple aux figures, le dispositif de soupape 9 comprend typiquement un conduit de dégazage 12, qui communique avec la chambre de flottaison 6 par l'intermédiaire ladite ouverture de dégazage 11. Le conduit de dégazage 12 traverse ainsi le dispositif de soupape 9 depuis ladite ouverture de dégazage 11 jusqu'à une ou plusieurs ouverture(s) d'évacuation 13, qui débouche(nt) sur l'extérieur de la vanne de dégazage 1, pour relier ainsi la chambre de flottaison 6 à l'extérieur de la vanne de dégazage 1, c'est-à-dire à la pression atmosphérique. Le dispositif de soupape 9 forme ainsi un évent, l'ouverture de dégazage 11 et le conduit de dégazage 12 définissant avantageusement un ajutage de dégazage.

Selon l'invention, le flotteur 5 est agencé mobile à l'intérieur de la chambre de flottaison 6 de manière à pouvoir se déplacer, sous l'effet de liquide et / ou de gaz présent(s) dans la chambre de flottaison 6 (et en particulier selon le niveau de liquide et / ou selon le volume de gaz dans la chambre de flottaison 6), entre
- une position haute dans laquelle la portion d'obturation 8 du flotteur 5 est en contact avec la face d'obturation 10 du dispositif de soupape 9 et obture l'ouverture de dégazage 11 du dispositif de soupape 9, et
- (au moins) une position basse dans laquelle ladite portion d'obturation 8 est éloignée de ladite face d'obturation 10 et dégage ainsi ladite ouverture de dégazage 11.

Orientée donc vers l'intérieur de la chambre de flottaison 6, la face d'obturation 10 du dispositif de soupape 9 est avantageusement positionnée de manière que ladite ouverture de dégazage 11 est agencée au-dessus et en regard de la portion d'obturation 8 du flotteur 5. Avantageusement, ladite ouverture de dégazage 11 est généralement inscrite dans un plan Po d'ouverture qui est orienté horizontalement. En application des explications fournies en préambule, la portion d'obturation 8 du flotteur 5 et la face d'obturation 10 de dispositif de soupape 9 forment ainsi, par coopération, une soupape peut s'ouvrir et se fermer automatiquement sous l'effet de liquide et / ou de gaz présent(s) dans la chambre de flottaison 6.

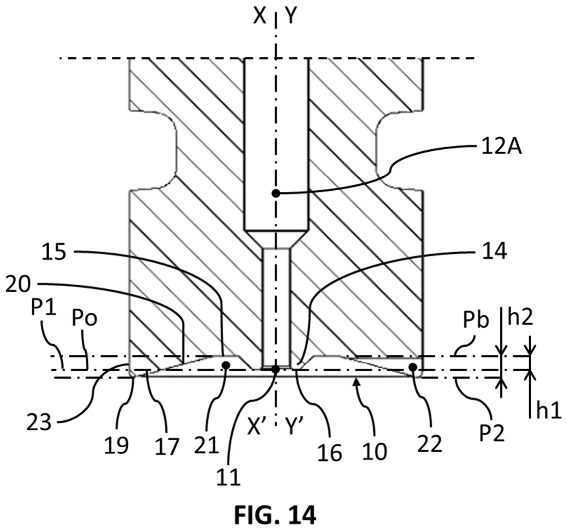

Selon l'invention, la face d'obturation 10 du dispositif de soupape 9 présente d'une part une protubérance centrale 14 (ou « pointe »), qui s'étend en saillie d'une surface de base 15 (ou « surface de référence ») que présente ladite face d'obturation 10 jusqu'à une extrémité libre 16 qui porte ladite ouverture de dégazage 11. Avantageusement, comme illustré en exemple aux figures, ladite surface de base 15 s'étend dans un plan Pb de base (ou « plan de référence »), qui est orienté parallèlement au plan Po d'ouverture dans lequel est respectivement inscrite ladite ouverture de dégazage 11 (figure 14). Avantageusement, comme illustré aux figures, ladite protubérance centrale 14 présente une forme tronconique, dont une grande base est définie par la surface de base 15 et une petite base opposée définit l'extrémité libre 16 de la protubérance centrale 14.

La face d'obturation 10 du dispositif de soupape 9 présente, d'autre part, au moins une protubérance latérale 17 qui s'étend en saillie de ladite surface de base 15 et qui définit au moins trois points de butée 18 répartis radialement autour de ladite protubérance centrale 14. Comme on le comprend, ladite au moins une protubérance latérale 17 (ou chacune desdites protubérances latérales 17 en cas de pluralité de protubérances latérales 17) est donc distincte de la protubérance centrale 14. Typiquement, ladite au moins une protubérance latérale 17 (ou chacune desdites protubérances latérales 17 en cas de pluralité de protubérances latérales 17) présente une face interne qui orientée du côté de la protubérance centrale 14. En retour, la protubérance centrale 14 présente une face externe (ou face latérale). Comme visible aux figures, la face interne de ladite au moins une protubérance latérale 17 (ou de chacune desdites protubérances latérales 17 en cas de pluralité de protubérances latérales 17) est agencée, au moins en partie, à distance de la face externe de la protubérance centrale 14.

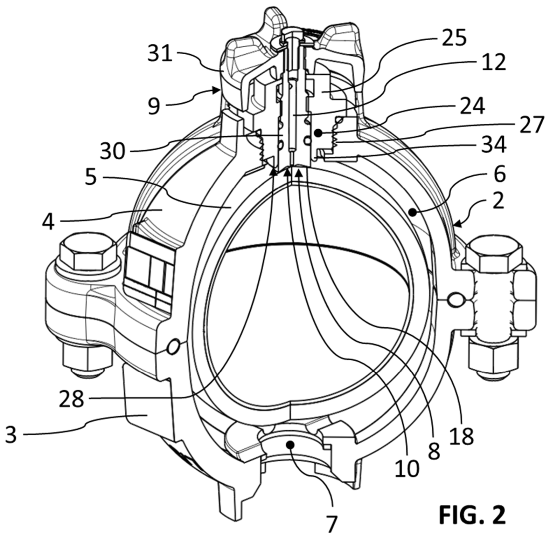

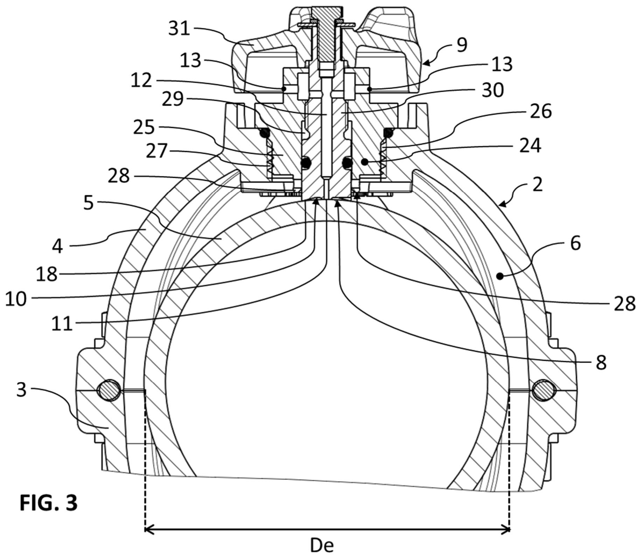

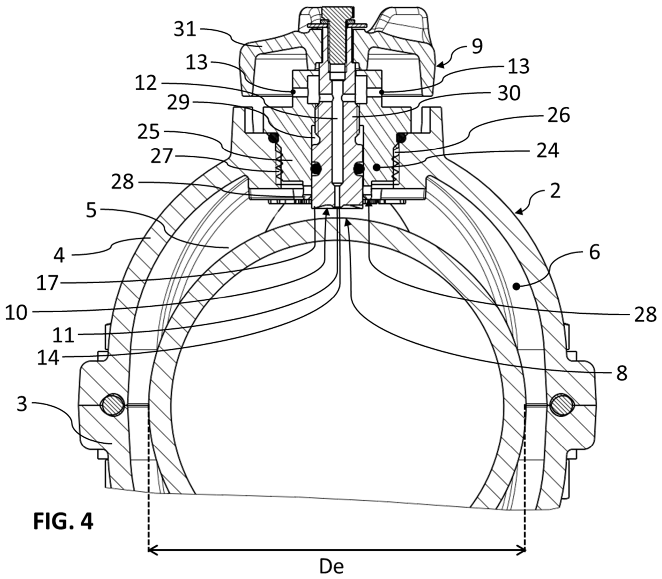

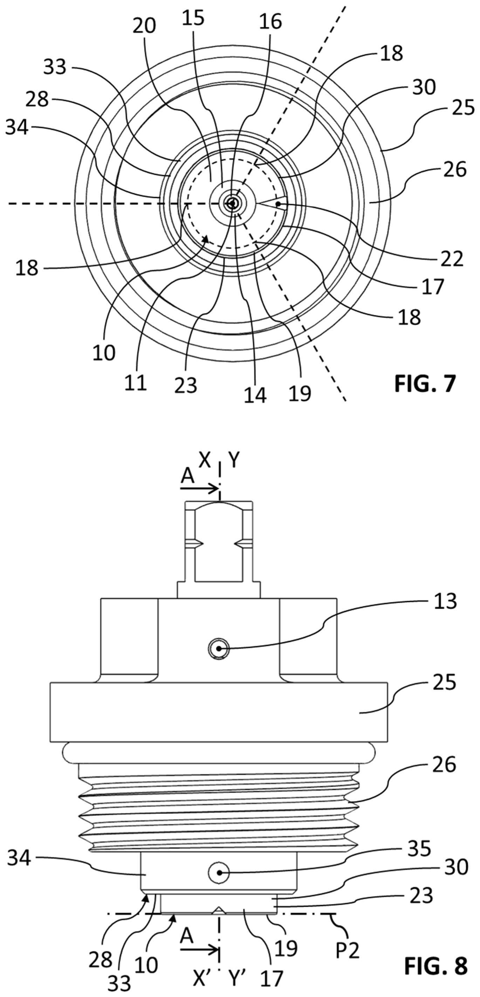

Avantageusement, ladite au moins une protubérance latérale 17 s'étend, depuis ladite surface de base 15, jusqu'à une extrémité libre 19 qui est agencée dans un plan (deuxième plan P2) qui est orienté parallèlement au plan Po d'ouverture dans lequel est respectivement inscrite ladite ouverture de dégazage 11. En d'autres termes, la protubérance centrale 14 s'étend, depuis la surface de base 15 jusqu'à son extrémité libre 16 suivant un axe X-X' d'extension moyenne, et lesdits au moins trois points de butée 18, distincts et distants les uns des autres, sont répartis sur un cercle (illustré en exemple par des tirets à la Fig. 7) dont le centre est agencé sur l'axe X-X' d'extension moyenne de la protubérance centrale 14 (figure 7). Comme visible en exemple aux figures 2 à 5, lesdites protubérance centrale 14 et protubérance(s) latérale(s) 17 s'étendent typiquement chacune depuis la surface de base 15 de la face d'obturation 10 du dispositif de soupape 9 en direction de l'intérieur de la chambre de flottaison 6, au-dessus et en regard du flotteur 5. Ladite face d'obturation 10 du dispositif de soupape 9 peut présenter par exemple une seule et unique protubérance latérale 17 qui définit à elle-seule lesdits au moins trois points de butée 18, comme dans le mode de réalisation illustré aux figures, ou présenter au moins trois protubérances latérales distinctes et distantes les unes des autres, lesquelles définissent chacune respectivement l'un desdits points de butée 18.

Selon l'invention, ladite protubérance centrale 14 et ladite au moins une protubérance latérale 17 sont agencées l'une par rapport à l'autre pour que, le flotteur 5 étant dans ladite position haute, un contact du flotteur 5 avec l'un au moins desdits points de butée 18, en particulier par déplacement dudit flotteur 5 sous l'effet de liquide et / ou de gaz présent(s) dans la chambre de flottaison 6, maintienne une obturation étanche de ladite ouverture de dégazage 11. En d'autres termes, ladite protubérance centrale 14 et ladite une protubérance latérale 17 sont conçues et configurées de sorte que, lorsque le flotteur 5 est dans ladite position haute, avec sa portion d'obturation 8 agencée en contact avec la face d'obturation 10 du dispositif de soupape 9 et obturant ainsi l'ouverture de dégazage 11 du dispositif de soupape 9, une mise en contact du flotteur 5 avec l'un au moins desdits points de butée 18, en particulier par déplacement du flotteur 5 sous l'effet de liquide et / ou de gaz présents dans la chambre de flottaison 6 par exemple (si le flotteur 5 n'est pas déjà en contact avec l'un au moins desdits points de butée 18) contribue à assurer le maintien d'une obturation étanche de ladite ouverture de dégazage 11 par la portion d'obturation 8 du flotteur 5. Ainsi, lesdits points de butée 18 sont donc prévus pour stabiliser la position de la portion d'obturation 8 du flotteur 5 par rapport à l'ouverture de dégazage 11 et limiter un risque de perte d'étanchéité entre la portion d'obturation 8 du flotteur 5 et l'ouverture de dégazage 11, en particulier par déplacement du flotteur 5 sous l'effet de liquide et / ou de gaz présents dans la chambre de flottaison 6, une fois que le flotteur 5 est en position haute. Qui plus est, la protubérance latérale 17 contribuer avantageusement à guider de manière précise le flotteur 5 dans son déplacement vers sa position haute, et facilite ainsi un positionnement précis de la portion d'obturation 8 du flotteur 5 par rapport à l'ouverture de dégazage 11 pour obturer efficacement cette dernière.

Grâce à une telle conception du dispositif de soupape 9, la vanne de dégazage 1 conforme à l'invention présente un fonctionnement particulièrement fiable, y compris à très basses pressions de service, c'est-à-dire à très basses pressions régnant dans les canalisations auxquelles est raccordée la vanne de dégazage. En particulier, il a été observé que la mise en œuvre d'une telle combinaison d'une protubérance centrale 14 et d'une protubérance latérale 17 telles que définies ci-avant permet d'assurer, de manière particulièrement fiable et répétable, une obturation étanche de l'orifice de dégazage 11 à des niveaux de pression basse aussi plus faible que 0,3 bar (0,3.10⁵ Pa, ou 3 m de Colonne d'Eau (mCE)), voire même avantageusement de l'ordre de 0,1 bar (0,1.10⁵ Pa, ou 1 m de Colonne d'Eau (mCE)). Plus spécifiquement, il a été observé que, bien que la mise en œuvre d'une protubérance centrale 14 s'avère particulièrement intéressante en tant que telle en matière de performance d'étanchéité à basses pressions, le contact entre le flotteur 5 et la protubérance centrale 14, en position haute du flotteur 5, peut s'avérer instable en cas de très faibles pressions, du fait de la faiblesse de l'effort de poussée alors exercée par le flotteur 5 à l'encontre de la protubérance centrale 14. Ainsi, alors que dans ladite position haute du flotteur 5, la portion d'obturation 8 de ce dernier obture normalement de manière étanche l'ouverture de dégazage 11 du dispositif de soupape 9, une instabilité du flotteur 5 peut conduire à une perte d'étanchéité. La mise en œuvre de ladite protubérance latérale 17, qui définit au moins trois points de butée 18 répartis autour de la protubérance centrale 14 tel qu'expliqué ci-avant, permet de réduire efficacement le risque d'un décalage (*i.e.* d'un déplacement latéral) intempestif du flotteur 5, en particulier sous l'effet de liquide et / ou de gaz présent(s) dans la chambre de flottaison 6, qui conduirait à un dégagement non souhaité de l'ouverture de dégazage 11 et à une fuite de liquide hors de la vanne de dégazage 1. En effet, en cas de décalage du flotteur 5, par exemple sous l'effet de liquide et / ou de gaz présent(s) dans la chambre de flottaison 6, alors que le flotteur 5 est en position haute, le flotteur 5 peut ainsi en butée contre au moins l'un desdits points de butée 18 (si le flotteur 5 ne l'est pas déjà), ce qui favorise le maintien de la portion d'obturation 8 du flotteur 5 en contact étanche contre la protubérance centrale 14 et l'orifice de dégazage 11 porté par cette dernière. Comme évoqué ci-avant, le dispositif de soupape 9 est distinct du corps creux 2. Le dispositif de soupape 9 forme donc un sous-ensemble qui est distinct du corps creux 2 (et donc du corps principal 3 et du couvercle 4) et qui est fixé à ce dernier, de sorte qu'aucune partie de la face d'obturation 10 du dispositif de soupape 9 n'est donc formée par le corps creux 2 lui-même. La conception et la fabrication de la vanne de dégazage 1 est donc particulièrement simple et fiable, puisqu'il pourrait sinon s'avérer particulièrement complexe (sinon impossible), en matière de maîtrise de la précision dimensionnelle, de former une telle protubérance centrale 14 et / ou une telle protubérance latérale 17 à partir du corps creux 2 lui-même.

De manière avantageuse en matière de fiabilité de la vanne de dégazage 1, ladite au moins une protubérance latérale 17 est préférentiellement conçue et configurée de manière que lesdits au moins trois points de butée 18 qu'elle définit sont sensiblement équi-répartis radialement autour de la protubérance centrale 14, et donc de l'ouverture de dégazage 11, c'est-à-dire de manière équi-répartie angulairement sur un cercle dont le centre est agencé sur l'axe X-X' d'extension moyenne de la protubérance centrale 14 (tel qu'illustré par des tirets à la figure 7). La protubérance latérale 17 peut donc définir plus que trois points de butée 18, mais elle en définit en tout état de cause au moins trois qui sont donc préférentiellement équi-répartis radialement autour de la protubérance centrale 14.

Avantageusement de section circulaire, l'ouverture de dégazage 11 présente une section utile de passage qui est préférentiellement comprise entre 0,5 mm² et 5 mm², et plus préférentiellement entre 0,75 mm² et 4,9 mm². Cela permet de garantir un fonctionnement particulièrement efficace de la vanne de dégazage 1 pour une pression de fonctionnement admissible (« PFA », i.e pression hydrostatique maximale) allant de 6 à 40 bar (6.10⁵ Pa à 40.10⁵ Pa). En retour, le conduit de dégazage 12, qui est préférentiellement de section circulaire, présente donc une section utile de passage qui est sensiblement au moins égale à celle de l'ouverture de dégazage 11. Avantageusement, comme dans le mode de réalisation illustré aux figures, un bord périphérique qui définit l'ouverture de dégazage 11 chanfreiné, afin notamment d'éviter une usure prématurée du flotteur 5 par contact entre ce dernier et la protubérance centrale 14. Dans ce cas, les valeurs de section utile de passage proposées ci-avant s'entendent hors prise en compte de ce chanfrein. En tout état de cause, il est désirable de conserver ce chanfrein le plus faible possible, afin de ne pas dégrader le bon fonctionnement de la vanne de dégazage 1.

De préférence, la portion d'obturation 8 du flotteur 5 est de forme convexe arrondie de révolution. Ladite portion d'obturation 8 présente donc préférentiellement une forme arrondie, avec un centre de concavité orienté du côté de l'intérieur de la chambre de flottaison 6, et un axe de révolution qui est avantageusement agencé verticalement. Par exemple, ladite portion d'obturation 8 peut présenter la forme d'une portion de sphère ou d'une portion d'ovoïde. A ce titre, comme dans le mode de réalisation illustré aux figures, le flotteur 5 est préférentiellement sphérique. Il forme donc ainsi préférentiellement une sphère, une boule, qui peut être creuse ou non. Cela simplifie la conception et le fonctionnement de la vanne de dégazage 11, en particulier du fait que cela autorise n'importe quelle portion de la face externe du flotteur 5 à former ladite portion d'obturation 8 de ce dernier, le flotteur 5 n'ayant pas d'orientation spatiale particulière à occuper pour remplir sa fonction d'obturation de l'ouverture de dégazage 11 du dispositif de soupape 9. En outre, une telle forme sphérique du flotteur 5 contribue à la fiabilité du fonctionnement de la vanne de dégazage, en limitant en particulier un risque de coincement du flotteur 5 dans la chambre de flottaison 6. Le flotteur 5 peut ainsi former une sphère, ou boule, dont le diamètre externe De est typiquement compris entre 90 mm et 200 mm (mais pourrait éventuellement être moindre). Ceci étant, d'autres formes générales de flotteur sont bien évidemment envisageables, bien que de manière moins préférentielle. Par exemple, une forme générale longiligne, telle qu'une forme générale cylindrique, pourrait être envisagée. Toutefois, il serait alors nécessaire de prévoir que le flotteur présente une forme suffisamment longue pour assurer un bon guidage de ce dernier dans la chambre de flottaison, et éviter que le flotteur ne se coince dans cette dernière. Une telle longueur de flotteur imposerait néanmoins une conception plus encombrante, moins compacte, de la vanne de dégazage.

Afin de fiabiliser encore l'étanchéité de l'obturation de l'orifice de dégazage 11 du dispositif de soupape 9 par la portion d'obturation 8 du flotteur 5, ladite portion d'obturation 8 est de préférence élastiquement déformable. Ainsi, l'obturation étanche de l'orifice de dégazage 12 est assurée par mise en compression et déformation élastique de la portion d'obturation 8 du flotteur 5 contre la protubérance centrale 14. Par exemple, le flotteur 5 peut être intégralement formé en un matériau élastiquement déformable ou encore être pourvu, au moins en une zone destinée à former ladite portion d'obturation 8, d'un revêtement en un matériau élastiquement déformable. Par exemple, le flotteur 5 peut être formé par une boule en métal (acier ou autre), intégralement revêtue d'un matériau élastiquement déformable (caoutchouc EPDM ou autre). Alternativement, mais de manière moins préférentielle sur le plan de la simplicité de fabrication et de la robustesse de la vanne de dégazage 1, la protubérance centrale 14 pourrait être pourvue en son extrémité libre d'une pièce en matériau élastiquement déformable, par exemple sous la forme d'une pièce annulaire qui entoure l'orifice de dégazage 11, pour assurer une obturation étanche de l'orifice de dégazage 12 par mise en compression et déformation élastique de cette pièce élastiquement déformable de la protubérance centrale 14 contre le flotteur 5.

Comme dans le mode de réalisation illustré aux figures, ladite protubérance centrale 14 et ladite au moins une protubérance latérale 17 sont préférentiellement formées par une même pièce monobloc, par exemple pièce monobloc usinée ou moulée. Autrement dit, le dispositif de soupape 9 comprend une pièce monobloc, c'est-à-dire formée d'un seul tenant, qui forme une base définissant ladite surface de base 15, ladite protubérance centrale 14 et ladite au moins une protubérance latérale 17 s'étendant chacune en saillie de la surface de base 15 par continuité de matière avec ladite base. Par exemple, ladite pièce monobloc est en métal (par exemple, en laiton). Une telle conception permet notamment de faciliter la fabrication du dispositif de soupape 9, tout en conférant à ce dernier une excellente robustesse mécanique, ainsi que de simplifier la conception et l'assemblage de la vanne de dégazage 1.

Au sens de l'invention, il n'est pas strictement nécessaire que le flotteur 5 soit à la fois en contact avec la protubérance centrale 14 et avec tout ou partie des points de butée 18 définis par la protubérance latérale 17, lorsque le flotteur 5 est en position haute, pour assurer une obturation étanche de l'ouverture de dégazage 11 par la portion d'obturation 8 du flotteur 5. En effet, les protubérance centrale 14 et protubérance(s) latérale(s) peuvent être agencées l'une par rapport à l'autre de manière qu'il peut au contraire exister un espace entre la surface du flotteur 5 et lesdits points de butée 18 lorsque le flotteur 5 est en position haute et que la portion d'obturation 8 de ce dernier obture l'ouverture de dégazage 11 portée par la protubérance centrale 14.

Néanmoins, il est particulièrement avantageux de prévoir que la protubérance latérale 17 est conçue et configurée de manière que, lorsque le flotteur 5 est en position haute et obture l'ouverture de dégazage 11, le flotteur 5 est en contact d'une part avec la protubérance centrale 14, et d'autre part avec au moins deux desdits trois points de butée 18, et plus préférentiellement avec lesdits trois points de butée 18. Ainsi, lorsque le flotteur 5 est en position haute, la protubérance latérale 17 tend avantageusement à empêcher un déplacement latéral du flotteur 5, ce qui contribue à fiabiliser encore le fonctionnement de la vanne de dégazage 1 à très faibles pressions de service. En pratique, cela peut être obtenu par un dimensionnement adéquat de la protubérance latérale 17 en regard des dimensions et forme respectives du flotteur 5. La mise en contact du flotteur 5 d'une part avec la protubérance centrale 14, et d'autre part avec au moins deux desdits trois points de butée 18, et plus préférentiellement avec lesdits trois points de butée 18, peut être avantageusement assurée grâce à une déformation élastique de la portion d'obturation 8 sous l'effort de poussée exercé à l'encontre du flotteur 5 par le liquide présent dans la chambre de flottaison 6, typiquement après que la portion d'obturation 8 du flotteur 5 est mise en contact avec la protubérance centrale 14 de la face d'obturation 10 du dispositif de soupape 9.

Avantageusement, comme illustré en exemple à la figure 14 en particulier, l'extrémité libre 16 de la protubérance centrale 14 s'étend dans un premier plan P1 (dans lequel est donc inscrit le plan Po d'ouverture de l'ouverture de dégazage 11), et ladite au moins une protubérance latérale 17 s'étend respectivement en saillie de ladite surface de base 15 jusqu'à son extrémité libre 19 qui est inscrite dans un deuxième plan P2, qui est parallèle audit premier plan P1, ledit premier plan P1 étant agencé entre ladite surface de base 15 et ledit deuxième plan P2. La (ou chacune des) protubérance(s) latérale(s) 17 s'étend donc en saillie de ladite surface de base 15 sur une hauteur h2 supérieure à une hauteur h1 suivant laquelle la protubérance centrale 14 s'étend respectivement en saillie de ladite surface de base 15. Lesdits points de butée 18 peuvent être ainsi typiquement définis par des points portés par l'extrémité libre 19 de la ou les protubérance(s) latérale(s) 17 et / ou par une face interne de la ou les protubérances latérales 17 orientée du côté de la protubérance centrale 14.

De manière préférentielle, la (ou chacune des) protubérance(s) latérale(s) 17 présente une face interne 20 qui orientée du côté de la protubérance centrale 14, comme évoqué ci-avant, et qui est inclinée en s'écartant de la protubérance centrale 14 en direction de l'extrémité libre 19 de la protubérance latérale 17, ladite face interne 20 définissant lesdits points de butée 18. Autrement dit, lesdits au moins trois points de butée 18 sont chacun respectivement formés par un point de ladite face interne 20 inclinée de la ou des protubérance(s) latérale(s) 17. Avantageusement, comme illustré aux figures, ladite face interne 20 s'étend depuis ladite surface de base 15 en direction de l'extrémité libre 19 de la protubérance latérale 17. Une telle configuration contribue avantageusement à améliorer encore la fiabilité de la vanne de dégazage 1 en assurant un maintien efficace dudit flotteur 5 dans ladite position haute et de la portion d'obturation 8 de ce dernier en contact étanche avec la protubérance centrale 14. De plus, une telle configuration favorise encore davantage un guidage particulièrement précis et répétable du flotteur 5 vers ladite position haute.

De préférence, comme dans le mode de réalisation illustré aux figures, ladite protubérance latérale 17 forme une protubérance latérale unique, tel qu'un mur continu, qui entoure ladite protubérance centrale 14, et définit ainsi une cavité 21 (ou « concavité »), au centre de laquelle est agencée ladite protubérance centrale 14. Typiquement, ladite protubérance latérale 17 est ainsi agencée concentrique avec la protubérance centrale 14, à distance de cette dernière. Comme illustré en exemple aux figures, ladite protubérance latérale 17 présente avantageusement une forme générale annulaire de section circulaire (mais non nécessairement refermée sur elle-même comme on le verra ci-après). Une telle conformation de la protubérance latérale 17 permet de définir ainsi facilement un très grand nombre de points de butée 18 tout autour de la protubérance centrale 14, contre lesquels le flotteur 5 pourra donc venir en contact lorsqu'il occupe ladite position haute, ce qui contribue à améliorer encore la fiabilité de la vanne de dégazage 1 à très basses pressions de service.

Plus préférentiellement encore, comme dans le mode de réalisation illustré aux figures, ladite protubérance latérale 17 forme une protubérance latérale unique, tel que décrit ci-avant, ladite protubérance latérale 17 unique présentant en outre une face interne 20 qui orientée du côté de la protubérance centrale 14 et qui est inclinée en s'écartant de la protubérance centrale 14 en direction de l'extrémité libre 19 de la protubérance latérale 17 unique, ladite face interne 20 définissant lesdits points de butée 18.

Dans le cas préférentiel où la protubérance latérale 17 forme une protubérance latérale unique, tel que décrit ci-avant, il est particulièrement avantageux de prévoir que ladite protubérance latérale 17 (unique) présente au moins une zone de discontinuité 22, par exemple une rainure, qui traverse ladite protubérance latérale 17 (unique) pour assurer une communication fluidique entre ladite cavité 21 et la chambre de flottaison 6 lorsque le flotteur 5 est en butée contre ladite protubérance latérale 17. En effet, la mise en œuvre d'une telle zone de discontinuité 22 permet d'éviter un risque que, sous l'effet d'une très forte pression dans les canalisations auxquelles est raccordée la vanne de dégazage 1, le flotteur 5 soit plaqué non seulement contre la protubérance centrale 14 pour obturer de manière étanche l'orifice de dégazage 11, mais également contre les points de butée 18 de la protubérance latérale 17 en obturant totalement de manière étanche la cavité 21 définie par cette dernière. Une telle obturation totale de ladite cavité 21 pourrait en effet conduire à un déséquilibre des forces en présence, qui empêcherait le flotteur 5 de quitter sa position haute, et donc de dégager à nouveau l'orifice de dégazage 11 pour permettre la libération de gaz. Grâce à une telle zone de discontinuité 22, la vanne de dégazage 1 est donc particulièrement fiable tant à très basses pressions de service qu'à très hautes pressions de service. Par exemple, comme dans le mode de réalisation illustré aux figures, ladite protubérance latérale 17 unique peut avantager former un mur circulaire autour de la protubérance centrale 14, lequel mur est interrompu localement par une rainure (zone de discontinuité 22) qui le traverse radialement par rapport à l'axe X-X' d'extension de la protubérance centrale 14 de manière à déboucher d'une part à l'intérieur de la cavité 21, par l'intermédiaire de la face interne 20 de la protubérance latérale 17, et d'autre part dans la chambre de flottaison 6, par l'intermédiaire d'une face externe 23 opposée de la protubérance latérale 17.

Selon une variante préférentielle, mise en œuvre dans le mode de réalisation illustré aux figures, le dispositif de soupape 9 constitue un sous-ensemble, qui est non seulement distinct du corps creux 2 de la vanne de dégazage 1, mais qui est en outre séparable (en totalité) dudit corps creux 2. Avantageusement, le dispositif de soupape 9 est donc en particulier totalement distinct et séparable du couvercle 4 qui ferme le corps principal 3 du corps creux 2, dans lequel est agencé le flotteur 5. A ce titre, le dispositif de soupape 9 comprend donc des moyens de fixation pour solidariser le dispositif de soupape 9 de manière détachable par rapport audit corps creux 2. Par exemple, comme dans le mode de réalisation illustré aux figures, le couvercle 4 du corps creux 2 est pourvue d'une ouverture supérieure 24, typiquement positionnée au-dessus et en regard du flotteur 5. En retour, le dispositif de soupape 9 comprend un corps de soupape 25, qui est agencé de manière amovible dans l'ouverture supérieure 24 du couvercle 4. Comme illustré aux figures, le corps de soupape 25 du dispositif de soupape 9 peut être pourvu d'un filetage externe 26, qui coopère avec un taraudage 27 correspondant respectivement porté par l'ouverture supérieure 24 du couvercle 4, pour assurer ainsi une solidarisation du dispositif de soupape 9 au corps creux 2 de la vanne de dégazage 1 par vissage du dispositif de soupape 9 dans l'ouverture supérieure 24 dudit couvercle 4. Alternativement, le dispositif de soupape 9 pourrait être assemblé de manière détachable au corps creux 2 à l'aide de boulons, par exemple. Avantageusement, un joint annulaire, par exemple torique, est agencé entre le corps de soupape 9 du dispositif de soupape 9 et le couvercle 4 pour assurer un assemblage étanche de ces derniers. Un tel caractère distinct et séparable du dispositif de soupape 9 permet ainsi une maintenance particulièrement aisée de la vanne de dégazage 1, par exemple en cas d'encrassement du conduit de dégazage 12 et / ou de l'ouverture de dégazage 11 du dispositif de soupape 9, ou encore d'usure ou de corrosion de ce dernier. Cela permet en outre de modifier de manière simple et rapide les caractéristiques de la vanne de dégazage 1 en matière de débit de libération de gaz, en remplaçant le dispositif de soupape 9 par un autre dispositif de soupape 9 dont le diamètre d'ouverture de dégazage 11 est différent, sans avoir besoin pour cela de démonter le corps creux 2 de la vanne de dégazage 1, voire même de démonter intégralement cette dernière.

Selon une variante préférentielle, mise en œuvre dans le mode de réalisation illustré aux figures, la vanne de dégazage 1 comprend un moyen de butée 28 additionnel (ou « moyen de butée de contrôle ») pour le flotteur 5, ce moyen de butée 28 additionnel étant donc distinct de la protubérance latérale 17 de la face d'obturation 10 du dispositif de soupape 9. Selon cette variante, le dispositif de soupape 9 comprend :
- un corps de soupape 25 qui est immobile par rapport au corps creux 2 de la vanne de dégazage 1, et qui présente un logement interne 29, et
- une pièce de soupape 30 (ou « plongeur »), dont une extrémité inférieure est formée par ladite face d'obturation 10 du dispositif de soupape 9.

Ladite pièce de soupape 30 est agencée mobile dans le logement interne 29 du corps de soupape 9 pour évoluer entre
- une première position (position dite « de service »), dans laquelle ladite face d'obturation 10 est agencée, par rapport audit moyen de butée 28 additionnel, de manière que la portion d'obturation 8 du flotteur 5 est autorisée à venir en contact avec ladite face d'obturation 10 pour obturer de manière étanche ladite ouverture de dégazage 11, et
- une deuxième position (position dite « de test » ou « de contrôle »), dans laquelle ladite face d'obturation 10 est rétractée vers l'intérieur du corps de soupape 25, de sorte que le moyen de butée 28 additionnel empêche la portion d'obturation 8 du flotteur 5 de venir en contact avec ladite face d'obturation 10 pour obturer de manière étanche ladite ouverture de dégazage 11.

Le dispositif de soupape 9 comprend en outre un moyen de commande 31 pour commander un passage de la pièce de soupape 30 mobile de l'une vers l'autre desdites première et deuxième positions (et réciproquement).

Ainsi, lorsque ladite pièce de soupape 30 est dans la position de service, le flotteur 5 est libre d'évoluer entre sa position basse et sa position haute, telles que définies ci-avant, sous l'effet de liquide et / ou de gaz présents dans la chambre de flottaison 6, pour permettre l'évacuation automatique de gaz présent dans la chambre de flottaison 6 et l'obturation étanche de l'ouverture de dégazage 11 du dispositif de soupape 9 de la vanne de dégazage 1 une fois le gaz évacué. Ladite position de service correspond donc à une position de fonctionnement normal de la vanne de dégazage 1. Au contraire, lorsque ladite pièce de soupape 30 est dans la position de contrôle, le flotteur 5 n'est libre d'évoluer par flottaison qu'entre sa position basse et une position supérieure dans laquelle il vient en contact avec le moyen de butée 28 additionnel, lequel maintient ainsi la portion d'obturation 8 du flotteur 5 éloignée de la face d'obturation 10 portée par la pièce de soupape 30, quel que soit donc le niveau du liquide présente dans la chambre de flottaison 6, de sorte à maintenir ladite ouverture de dégazage 11 en communication fluidique avec la chambre de flottaison 6.

Une telle conception particulière permet de réaliser de manière simple et rapide un contrôle du bon fonctionnement de la vanne de dégazage 1. En effet, lorsque la pièce de soupape 30 mobile est mise en position de contrôle à l'aide du moyen de commande 31, du liquide doit normalement s'écouler hors du dispositif de soupape 9. Si le dispositif de soupape 9 ne laisse s'échapper ni gaz ni liquide, cela peut indiquer que l'ouverture de dégazage 11 et / ou le conduit dégazage 12 du dispositif de soupape 9 est obstruée, ou encore que la chambre de flottaison 6 est isolée fluidiquement des canalisations à laquelle la vanne d'aérage 1 est raccordée, par exemple parce qu'une vanne d'arrêt ou un robinet d'isolement 32 agencé(e) entre les canalisations et la chambre de flottaison 6 de la vanne dégazage 1 est resté(e) fermé(e), par exemple après une opération d'inspection et d'entretien de la vanne dégazage 1. Grâce à un tel système de contrôle, la vanne de dégazage 1 est donc particulièrement sûre.

De préférence, comme envisagé ci-avant, le dispositif de soupape 9 constitue un sous-ensemble distinct et séparable du corps creux 2 de la vanne de dégazage 1, de sorte donc que ledit corps de soupape 25 et la pièce de soupape 30 mobile sont donc distincts et séparables du corps creux 2 de la vanne de dégazage 1. Cela permet donc une maintenance et un remplacement aisé du système de contrôle de la vanne de dégazage 1.

Tel qu'illustré en exemple aux figures, la pièce de soupape 30 s'étend avantageusement suivant un axe Y-Y' d'extension moyenne entre ladite extrémité inférieure qui est formée par la face d'obturation 10 du dispositif de soupape 9 et une extrémité supérieure opposée. Avantageusement, ledit axe Y-Y' d'extension moyenne de la pièce de soupape 30 est colinéaire à l'axe X-X' d'extension moyenne de la protubérance centrale 14 de ladite face d'obturation 10. La pièce de soupape 30 est agencée dans le logement interne 29 du corps de soupape 25 pour se déplacer entre lesdites première et deuxième positions suivant une direction de déplacement qui est avantageusement colinéaire ou parallèle à ladite direction Y-Y' d'extension moyenne de la pièce de soupape 30, ladite direction de déplacement étant avantageusement verticale.

Par exemple, la pièce de soupape 30 porte un filetage externe qui coopère avec un taraudage correspondant dont est respectivement pourvu le logement interne 29 du corps de soupape 25 pour relier mécaniquement entre eux la pièce de soupape 30 et le corps de soupape 25 et assurer un passage de la pièce de soupape 30 de l'une vers l'autre desdites première et deuxième positions (et réciproquement) par rotation de la pièce de soupape 30 suivant son axe Y-Y' d'extension moyenne.

Avantageusement, comme visible en exemple aux figures, la pièce de soupape 30 est pourvue d'un perçage interne 12A formant une partie au moins dudit conduit de dégazage 12 et relié en l'une de ses extrémités à l'ouverture de dégazage 11. L'autre extrémité de ce perçage interne 12A débouche par exemple, quelle que soit la première ou deuxième position occupée par la pièce de soupape 30, dans une chambre interne 12B du corps de soupape 25. En retour, le corps de soupape 25 comprend par exemple un ou plusieurs perçages internes 12C qui relient ladite chambre interne 12B à ladite (ou lesdites) ouverture(s) d'évacuation 13. De préférence, un joint ou une garniture d'étanchéité est agencé(e) est prévu pour assurer une étanchéité entre la pièce de soupape 30 et une face interne du logement interne 29 du corps de soupape 25.

Typiquement relié mécaniquement à la pièce de soupape 30, le moyen de commande 31 est de préférence un moyen de commande manuel. Comme dans le mode de réalisation illustré aux figures, un tel moyen de commande 31 manuel peut prendre la forme d'un volant, qui est relié à l'extrémité supérieure de la pièce de soupape 30, et dont la rotation manuelle dans un sens ou dans l'autre permet ainsi de choisir la position occupée par la pièce de soupape 30 mobile.

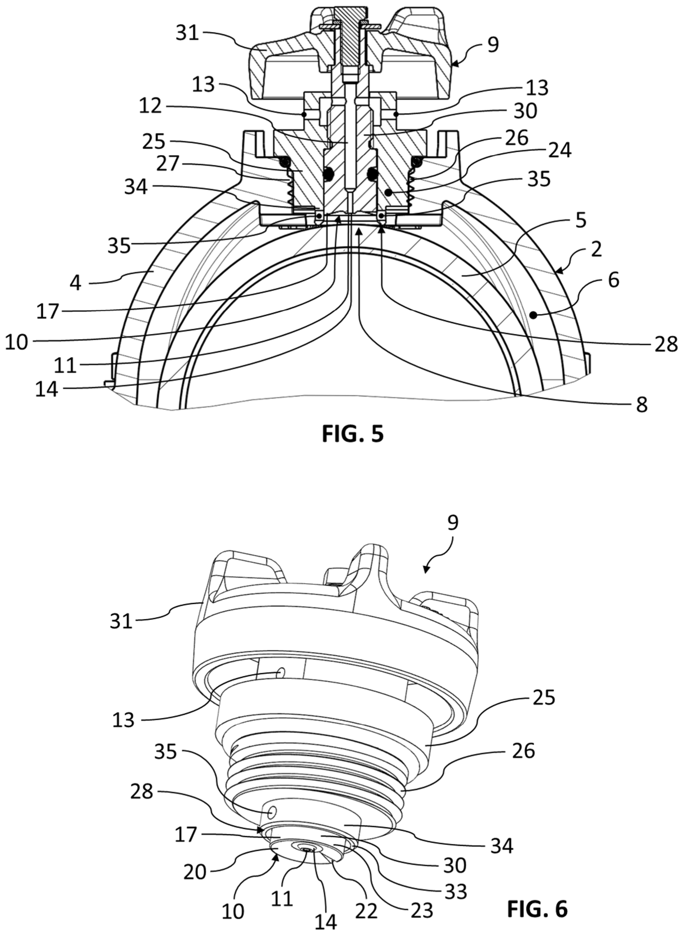

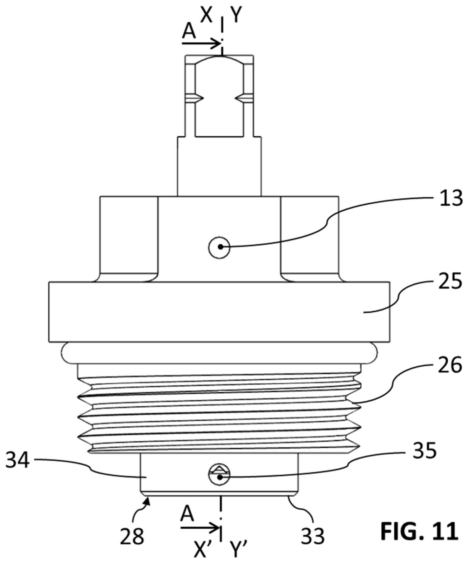

De manière plus préférentielle, ledit moyen de butée 28 additionnel est porté par le corps de soupape 25, dont il définit une extrémité inférieure, de sorte que
- dans ladite première position (figures 2 à 4, et 6 à 9), ladite face d'obturation 10 portée par la pièce de soupape 30 mobile est totalement agencée hors du corps de soupape 25, au-delà dudit moyen de butée 28 additionnel, et
- dans ladite deuxième position (figures 5, et 10 à 12), ladite face d'obturation 10 est totalement agencée en deçà dudit moyen de butée 28 additionnel, à l'intérieur donc du corps de soupape 25.

Par exemple, comme dans le mode de réalisation illustré aux figures, ledit moyen de butée 28 additionnel peut être formé par une extrémité inférieure 33 libre d'une portion tubulaire 34 creuse, de préférence de section circulaire, du corps de soupape 25. Ledit moyen de butée 28 additionnel constitue donc ainsi une butée annulaire contre laquelle le flotteur 5 pourra venir en contact lorsque la pièce de soupape 30 est dans ladite deuxième position.

Lorsque la pièce de soupape 30 est dans ladite première position, la face d'obturation 10 portée par cette dernière est agencée hors de ladite portion tubulaire 34 creuse (figures 2 à 4, et 6 à 9), tandis que lorsque la pièce de soupape 30 est dans ladite deuxième position, ladite face d'obturation 10 est agencée à l'intérieur de ladite portion tubulaire 34 creuse, ou à tout le moins à distance de l'extrémité inférieure 33 libre de la portion tubulaire 34 creuse et en communication fluidique avec l'intérieur de cette dernière (figures 5, et 10 à 12). Comme illustré en exemple à la figure 5 en particulier, ladite portion tubulaire 34 creuse est pourvue d'un ou plusieurs perçages 35 qui assure(nt) le maintien d'une communication fluidique entre la chambre de flottaison 6 et l'intérieur de la portion tubulaire 34 creuse, et donc entre la chambre de flottaison 6 et l'orifice de dégazage 11, lorsque le flotteur 5 est en contact contre la butée annulaire ainsi formée par l'extrémité inférieure 33 libre de la portion tubulaire 34 creuse.

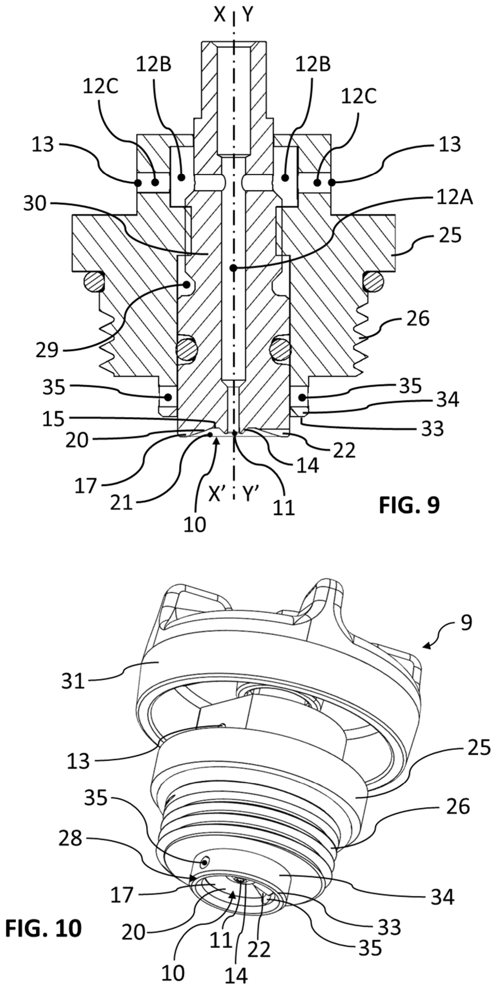

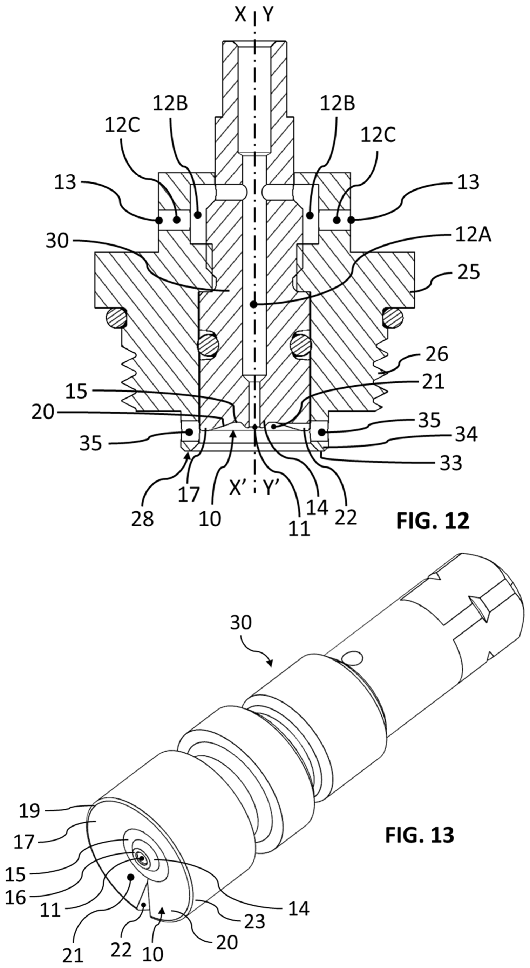

Avantageuse, lorsque la pièce de soupape 30 est dans la position de contrôle, la zone de discontinuité 22 de la protubérance latérale 17 débouche de la face externe de la protubérance latérale 17 en regard du ou de l'un des perçages 35 de la portion tubulaire 34 creuse pour permettre la mise en communication fluidique de la cavité 21 de la face d'obturation 10 portée par la pièce de soupape 30 avec la chambre de flottaison 6 (figures 10 et 12).

Les termes « inférieur(e) » et « supérieur(e) » utilisés ci-avant se réfèrent avantageusement à une orientation des éléments concernés par rapport à la verticale, dans la mesure où la vanne de dégazage 1 selon l'invention est avantageusement destinée à être installée en position sensiblement verticale, le déplacement du flotteur 5 entre les positions basse et haute correspondant à un déplacement selon une direction sensiblement verticale.

## Revendications

1. Vanne de dégazage (1) pour canalisations de liquide sous pression, comportant
- un corps creux (2), qui définit une chambre de flottaison (6),
- un dispositif de soupape (9), distinct dudit corps creux (2) et comprenant une face d'obturation (10) pourvue d'une ouverture de dégazage (11), et
- un flotteur (5) comprenant une portion d'obturation (8) et agencé mobile à l'intérieur de la chambre de flottaison (6) de manière à pouvoir se déplacer, sous l'effet de liquide et/ou de gaz présents dans la chambre de flottaison (6), entre
∘ une position haute dans laquelle la portion d'obturation (8) est en contact avec la face d'obturation (10) et obture ladite ouverture de dégazage (11), et
∘ une position basse dans laquelle la portion d'obturation (8) est éloignée de la face d'obturation (10) et dégage ainsi ladite ouverture de dégazage (11),
ladite vanne de dégazage (1) étant **caractérisée en ce que** ladite face d'obturation (10) présente une surface de base (15), une protubérance centrale (14) qui s'étend en saillie de ladite surface de base (15) jusqu'à une extrémité libre (16) qui porte ladite ouverture de dégazage (11), et au moins une protubérance latérale (17) qui s'étend en saillie de ladite surface de base (15) et qui définit au moins trois points de butée (18) répartis radialement autour de la protubérance centrale (14), ladite protubérance centrale (14) et ladite au moins une protubérance latérale (17) étant agencées l'une par rapport à l'autre pour que, le flotteur (5) étant dans ladite position haute, un contact du flotteur (5) avec l'un au moins desdits points de butée (18) maintienne une obturation étanche de ladite ouverture de dégazage (11).

2. Vanne de dégazage (1) selon la revendication précédente, dans laquelle lesdits au moins trois points de butée (18) sont équi-répartis radialement autour de la protubérance centrale (14).

3. Vanne de dégazage (1) selon l'une quelconque des revendications précédentes, dans laquelle l'extrémité libre (16) de la protubérance centrale (14) s'étend dans un premier plan (P1), ladite au moins une protubérance latérale (17) s'étendant en saillie de ladite surface de base (15) jusqu'à une extrémité libre (19) qui est inscrite dans un deuxième plan (P2) qui est parallèle audit premier plan (P1), ledit premier plan (P1) étant agencé entre ladite surface de base (15) et ledit deuxième plan (P2).

4. Vanne de dégazage selon la revendication précédente, dans laquelle ladite au moins une protubérance latérale (17) présente une face interne (20) qui orientée du côté de la protubérance centrale (14) et qui est inclinée en s'écartant de la protubérance centrale (14) en direction de l'extrémité libre (19) de la protubérance latérale (17), et qui définit lesdits points de butée (18).

5. Vanne de dégazage (1) selon l'une quelconque des revendications 3 et 4, dans laquelle ladite protubérance latérale (17) forme une protubérance latérale unique qui entoure ladite protubérance centrale (14), définissant ainsi une cavité (21), au centre de laquelle est agencée ladite protubérance centrale (14).

6. Vanne de dégazage (1) selon la revendication précédente, dans laquelle ladite protubérance latérale (17) présente au moins une zone de discontinuité (22), par exemple une rainure, qui traverse ladite protubérance latérale (17) pour assurer une communication fluidique entre ladite cavité (21) et la chambre de flottaison (6) lorsque le flotteur (5) est en butée contre ladite protubérance latérale (17).

7. Vanne de dégazage (1) selon l'une quelconque des revendications précédentes, dans laquelle ladite protubérance centrale (14) et ladite au moins une protubérance latérale (17) sont formées par une même pièce monobloc.

8. Vanne de dégazage (1) selon l'une quelconque des revendications précédentes, dans laquelle la portion d'obturation (8) du flotteur (5) est de forme convexe arrondie de révolution, ledit flotteur (5) étant de préférence sphérique.

9. Vanne de dégazage (1) selon l'une quelconque des revendications précédentes, dans laquelle le dispositif de soupape (9) constitue un sous-ensemble séparable du corps creux (2) de la vanne de dégazage (1).

10. Vanne de dégazage (1) selon l'une quelconque des revendications précédentes, dans laquelle la portion d'obturation (8) du flotteur (5) est élastiquement déformable.

11. Vanne de dégazage (1) selon l'une quelconque des revendications précédentes, laquelle comprend un moyen de butée additionnel (28) pour le flotteur (5), et dans laquelle le dispositif de soupape (9) comprend
- un corps de soupape (25) qui est immobile par rapport au corps creux (2) de la vanne de dégazage (1), et qui présente un logement interne (29),
- une pièce de soupape (30), dont une extrémité inférieure est formée par la face d'obturation (10) du dispositif de soupape (9), et qui est agencée mobile dans le logement interne (29) du corps de soupape (25) pour évoluer entre
∘ une première position dans laquelle ladite face d'obturation (10) est agencée de manière que la portion d'obturation (8) du flotteur (5) est autorisée à venir en contact avec ladite face d'obturation (10) pour obturer de manière étanche ladite ouverture de dégazage (11), et
∘ une deuxième position dans laquelle ladite face d'obturation (10) est rétractée vers l'intérieur du corps de soupape (25), de sorte que le moyen de butée (28) additionnel empêche la portion d'obturation (8) du flotteur (5) de venir en contact avec ladite face d'obturation (10) pour obturer de manière étanche ladite ouverture de dégazage (11),
- et un moyen de commande (31) pour commander un passage de ladite pièce de soupape (30) mobile de l'une vers l'autre desdites première et deuxième positions.
